Europäisches Patentamt

European Patent Office

Office européen des brevets

(19)

(11) EP 1 690 746 A2

(12) EUROPEAN PATENT APPLICATION

(43) Date of publication:
16.08.2006 Bulletin 2006/33

(51) Int Cl.:
B60R 19/18 (2006.01)    B29C 44/08 (2006.01)
C08J 9/228 (2006.01)

(21) Application number: 06011358.6

(22) Date of filing: 23.06.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 27.06.2002  US 184156

(62) Document number(s) of the earlier application(s) in
accordance with Art. 76 EPC:
03761991.3 / 1 519 985

(71) Applicant: The Dow Global Technologies Inc.
Midland, Michigan 48674 (US)

(72) Inventors:
• Cate, Peter
Blockley, Gloucestershire (GB)
• Maurer, Myron, J.
Lake Orion,
MI 48359 (US)
• Park, Chung, P.
Waltham,
MA 02453 (US)
• Tusim, Martin, H.
Midland,
MI 48642 (US)
• Bindels, Dominicus L.A.M.
Temeuzen (NL)

(74) Representative: Hull, John Philip
Beck Greener
Fulwood House
12 Fulwood Place
GB-London WC1V 6HR (GB)

Remarks:
This application was filed on 01 - 06 - 2006 as a
divisional application to the application mentioned
under INID code 62.

(54) **Automobile energy absorbing article**

(57)    An automobile energy absorbing article comprising a first part of an anisotropic thermoplastic foam and a second part of a shaped foam part comprising an isotropic foam wherein the anisotropic foam part and isotropic foam part intersect along at least one common surface and a process for producing the article.

**Description**

This invention relates to a composite foam structure having a region of anisotropic strength and a region of isotropic strength, methods of preparation of such composite foam structures and uses of such composite foam structures, for instance in automobile energy absorbing applications, such as automobile bumpers.

Regulations in many countries around the world have been promulgated which relate to energy absorbing articles or parts in automobiles. There are regulations relating to the impact of the body to the interior of a vehicle. In addition, some regulations relate to automobile bumpers which must protect the automobile chassis from significant damage at low speed (that is 4-8 km/hr). Furthermore, there are regulations that have been promulgated in Europe which relate to reducing the number of injuries resulting from pedestrians being impacted by automobiles. There are regulations that seek to limit or reduce the amount of emissions from automobiles. One way to reduce the emissions is to lower the fuel consumption by lowering the weight of vehicles, thus there is a move to replace heavier metal parts with plastic and foam parts. As a result of these various regulations, foam materials have found use in various energy absorbing structures or parts in automobiles, for instance in headliners, pillars, doors and bumpers. U.S. Patent Publication US 2002/0121787 discloses a bumper system having a foam portion containing recesses extending through a predetermined thickness of the foam. Disposed in the recesses are cylindrical cell matrices which are configured to absorb energy from an impact on the bumper from an external force. U.S. Patent Publication 2001/0035,658A1 (incorporated herein by reference) shows a bumper fascia in which a portion of the fascia is filled with an expanded bead foam. U.S. Patent No. 6,213,540 (incorporated herein by reference) discloses the use of planks of anisotropic foam in front and rear-end systems. An anisotropic foam exhibits exceptional energy management properties, such as a foam made from a series of strands fused together with the strands oriented in the same direction. When impacted, this foam absorbs energy by crushing and by using energy to delaminate the foam strands from one another. The problem with the use of an anisotropic foam is that once it has undergone a significant impact, the impact causes the foam to deform and to lose its ability to absorb significant energy in subsequent impacts. Furthermore, anisotropic foams made from oriented strands of foam such as disclosed in U.S. Patent No. 6,213,540 could be fabricated cost effectively into simple shapes only. In order to make complex shapes of such foams, a significant amount of costly tooling and scrap are incurred. A significant problem with anisotropic foams is that when subjected to low speed crashes, such as at 5 mph, the anisotropic foam will absorb energy, but the foam part is not resilient, or recoverable, and thus loses its ability to absorb similar levels of energy when the foam part is subjected to a secondary impact. Thus, in many such situations it becomes necessary to replace the foam structure after the initial impact. What is needed is a lightweight, easily formed foam part which can absorb energy at slow speeds after multiple impacts. Furthermore, what is needed is an energy absorbing system which will effectively absorb energy at higher speeds, such as in pedestrian impacts.

The invention is a composite foam structure comprising a first segment of an anisotropic thermoplastic foam and a second segment shaped foam of a part comprising an isotropic foam wherein the anisotropic foam part and isotropic foam part intersect along at least one common surface. Preferably, the anisotropic foam comprises a plurality of extruded strands of foam which are fused together wherein all of the strands of the foam are oriented in the same direction.

In another embodiment the invention is an automobile bumper system comprising a bumper beam adapted to be attached to the chassis of a vehicle; one or more composite structures according to the invention and a bumper fascia which covers the bumper beam and the composite foam structures so that they are not visible; wherein the isotropic foam part is disposed between the fascia and the anisotropic foam portion of the composite structure. Preferably, the anisotropic foam segment comprises a plurality of oriented strands of foam which are fused together, which are attached to the bumper beam. More preferably the direction of oriented strands of the anisotropic foam blocks is transverse to the longitudinal direction of the bumper beam. The direction of orientation of strands of foam is preferably perpendicular to the vertical surface of the bumper.

In another embodiment, the invention is a method of preparing a composite structure according to the invention comprising placing a part of anisotropic foam in a mold, placing thermoplastic beads impregnated with a blowing agent in the remainder of the mold, injecting steam into the mold under conditions such that the thermoplastic beads expand, melt at the surface, form a coalesced isotropic foamed structure which bond to one or more surfaces of the anisotropic foam.

The composite foam structures of the invention illustrate several advantages. First, the composite structures can be shaped in a cost-effective manner without the need for costly and time-consuming machining processes. Furthermore, the composite foam structures of the invention are resilient at low impacts, thus allowing a part using structures of the invention to be subjected to a relatively low impact without damaging the underlying structure. Further, such composite foam structures exhibit the ability to absorb significant energy when subjected to high speed pedestrian impacts.

Figure 1 illustrates a bumper system utilizing the composite structures of the invention.

Figure 2 is a plot of recoverability as a function of anisotropic foam thickness.

Figures 3 to 5 are representative plots of the affect of anisotropic foam thickness on the quasi-static compressive stress versus strain response of composite foam specimens which are thermally welded, adhesively bonded and taped together, respectively.

Figures 6 to 8 are representative plots of the affect of anisotropic foam thickness on the dynamic compressive stress versus strain response of composite foam specimens, which are thermally welded, adhesively bonded or taped together, respectively.

As used herein an anisotropic foam means a foam which has anisotropic strength properties. Anisotropic strength properties mean that the foam structure has different impact strengths in different directions or along different planes. As used herein, isotropic foam means foam that has substantially the same strength properties in all directions. Substantially the same as used herein means that the difference in strength properties in different directions is 10 percent or less, preferably 5 percent or less, and most preferably 1 percent or less.

The anisotropic foam block can be prepared from any foam which exhibits anisotropic strength properties. Further, it may be prepared by any known process that provides an anisotropic foam or a foam having anisotropic properties. Preferably, the foam is comprised of a thermoplastic polymer matrix.

Preferred foamable thermoplastic compositions which may be used to prepare aniostropic foams include polyesters, polyamides, polyvinylchloride, polyvinylidene chloride, polycarbonates, polystyrene resins, polyethylene, including low density polyethylene, linear low density polyethylene, and high density polyethylene (HDPE), polypropylene, and co-polymers of ethylene or propylene and a monoethylenically unsaturated monomer copolymerizable therewith. Examples include copolymers of ethylene and acrylic acid or methylacrylic acid and $C_{1-4}$ alkyl esters or ionomeric derivatives thereof; ethylene vinyl-acetate copolymers; ethylene/carbon monoxide copolymers; anhydride containing olefin copolymers of a diene; copolymers of ethylene and an alphaolefin having ultra low molecular weight (that is, densities less than 0.92 g/cc); blends of all of the above resins; blends thereof with polyethylene (high, intermediate or low density); etc. Preferred polyolefins include polypropylene homopolymers, impact grade polypropylene and copolymers of polypropylene that are comprised of at least 50 percent propylene by weight. Other preferable polyolefins include branched polypropylene homopolymer and branched copolymers of polypropylene.

The foamable thermoplastic polymer material or blend is melt processed in a conventional manner by feeding, melting, metering it into a conventional melt processing apparatus such as an extruder. A volatile blowing agent and an optional cross linking agent are mixed with the thermoplastic polymer or blend under a pressure suitable to form a flowable gel or admixture. A cross linking agent may be added in an amount which is sufficient to initiate cross linking and raise the pressure of the gel or admixture to less than that pressure which causes melt fracture of the polymer to occur. The term "melt fracture" is used in the art to describe a melt flow instability of a polymer as it is extruded through a die, which flow instability causes voids and/or other irregularities in the final product. It is also possible to add various additives such as inorganic fillers, pigments, anti-oxidants, acid scavengers, ultraviolet absorbers, flame retardants, surfactants, processing aids, extrusion aids, nucleating agents and blowing agents, and the like as disclosed in U.S. Patent No. 6,213,540.

The amount of blowing agent mixed in the polymer is primarily dependent upon the foam density that is desired. Densities of a foam according to this invention are preferably in the range of 270 $kg/m^3$ to 20 $kg/m^3$, more preferably 200 $kg/m^3$ to 30 $kg/m^3$, and most preferably 32 $kg/m^3$ to 80 $kg/m^3$. The foaming agent to achieve the foam densities in the broadest range is in the range of 0.011 to 0.23 gram mole by weight per 100 grams by weight of the thermoplastic resin or blend. In general, incorporation of a greater amount of foaming agent results in a higher expansion ratio (the term "expansion ratio" herein referred to means the ratio of the density of the resin or blend to the density of the expanded product) and thus a lower foam density. However, care must be taken not to incorporate an amount of foaming agent that causes a separation between resin and foaming agent in the extruder and die. When this happens, "foaming in the die" occurs, and the surface of the expanded product becomes rough, generally producing an unsatisfactory product.

Other suitable methods of preparing and extruding foamable thermoplastic blends to produce extruded profiles which may be useful in preparing energy absorbing articles in accordance with the principles of this invention are disclosed in U.S. Patent Nos. 5,348,795; 5,527,573 and 5,567,742, all of which are hereby incorporated herein by reference.

In accordance with a particular aspect of this invention, energy absorbing articles exhibiting anisotropic strength properties are prepared by extruding a foamable thermoplastic gel through a die including a plurality of orifices arranged such that contact between adjacent streams of molten extrudate causes the surfaces thereof to adhere to form a unitary coalesced foam article, wherein the polymeric component of the foamable gel comprises a polymer blend including a major amount (greater than 50 percent by weight) of a homopolymer or copolymer in which the majority of monomeric units are propylene monomeric units and a minor amount (less than 50 percent by weight) of a polyethylene type resin modifier in which the majority of monomeric units are ethylene monomeric units. It has been discovered that the resulting coalesced strand foams produced from such polymeric blends unexpectedly exhibit increased compressive strength, especially in directions normal to the longitudinal direction of the coalesced strands (that is., the extrusion direction), relative to coalesced strand foams made from polypropylene homopolymer or from a blend of polypropylene homopolymer and an ethylene-propylene copolymer resin modifier. The increased compressive strength, especially in directions normal to the longitudinal direction of the coalesced strands, is attributable to improved strand-to-strand adhesion caused by the addition of a minor amount of a polyethylene type resin modifier which is a homopolymer or copolymer comprised entirely or mostly of ethylene monomeric units. The polyethylene type resin modifiers will typically have a melting point lower than that of the polypropylene homopolymer or copolymer, and preferably have a melting point below 125°C. The polyethylene type resin modifiers are comprised primarily of ethylene monomeric units, and more preferably are comprised of at least 80 percent ethylene monomeric units by weight.

Examples of preferred polyethylene type resin modifiers include low density polyethylene homopolymers and substantially linear ethylenic polymers prepared using a metallocene catalyst as disclosed in U.S. 6,213,540 B1, U.S. Patent Nos. 5,340,840, 5,272,236, 5,677,383 and 4,076,698.

The coalesced strand foam articles useful in this invention may include missing strands or designed voids, that is, a profile or cross section transverse to the extrusion direction which is discontinuous. Coalesced strand foam articles having missing strands or designed voids can be prepared by extruding a thermoplastic foamable gel through a die having a multiplicity of orifices arranged in an array defining voids such that the extruded strands are joined at their extremities to form a network defining voids. A die having a multiplicity of orifices which is designed to produce coalesced strand foams which do not have missing strands or designed voids can be modified to produce coalesced strand foams having missing strands or designed voids by blocking off some of the orifices. Energy absorbing articles having designed voids may be advantageously employed in certain applications to allow manipulation of bulk density and softness (modulus control), and increase air flow. Also, the designed voids may be used for creating raceways for wires, optical fibers, and the like. Methods of forming stranded foam articles having designed voids are described in U.S. Patent No. 4,801,484 which is incorporated by reference herein.

Alternatively, the coalesced strand foam articles used in this invention can be prepared with hollow foamed strands as described in U.S. Patent No. 4,755,408 and U.S. Patent No. 4,952,450.

By forcing the extrudable mixture through the extrusion die the invention, one obtains (a) a plurality of separately extruded and thereafter coalesced hollow foam strands or (b) a combination of a plurality of separately extruded and thereafter coalesced solid foam strands and a plurality of separately extruded and thereafter coalesced hollow foam strands. In a preferred embodiment, a grouping of solid, coalesced foam strands forms one part of a composite cellular foamed structure and a grouping of hollow, coalesced foam strands forms a second part of a composite cellular foamed structure. The blowing agent composition at least partially determines the temperatures for each of the process steps. Preparation of such a composite foamed structure preferably employs a die that has a plurality of first orifices or orifice sets that yield hollow foam strands and a plurality of second or single orifices that yield solid foam strands.

Where the extrusion die provides for both solid and hollow foam strands, die apertures or orifices for both the solid and hollow foam strands may take on nearly any geometric shape so long as the shapes yield, as appropriate, the respective solid and hollow foam strands. Suitable geometric shapes include round, square, polygonal, x-shapes, crossshapes and star-shapes. Selection of a particular shape or combination of shapes allows production of a cellular foamed structure with a specific profile or shape. The shape is preferably round or circular, especially for the hollow foam strands. Where the cellular foam structures of the invention comprise both hollow foam strands and solid foam strands, the geometric shapes, while preferably the same, may differ without departing from the scope and spirit of the invention.

The extruded thermoplastic foams exhibiting anisotropic strength property may also be prepared as extruded planks. Extruded thermoplastic foam planks may be pulled through a slit die at generally any rate of speed commonly used, and can be stretched or pulled from the die by any means known in the art, such as by pulling with opposing belts, nip rollers and like take-up means.

Although a particularly preferred method of preparing the energy absorbing articles exhibiting anisotropic strength properties involves extruding a foamable thermoplastic gel through a die including a multiplicity of orifices arranged such that contact between adjacent streams of molten extrudate causes the surfaces thereof to adhere and form a unitary coalesced foam article, other methods known to those skilled in the art may be employed to form thermoplastic foam articles exhibiting similar or equivalent anisotropic strength properties. Alternative methods of forming foam articles exhibiting anisotropic strength properties are disclosed in U.S. Patent No. 6,213,540B1, see column 7, line 64 to column 9, line 58, incorporated herein by reference.

Although preparation of the extruded thermoplastic foams useful in the invention preferably employs a heated extruder, skilled artisans can readily substitute other apparatus that accomplish the same purpose. U.S. Patent No. 5,817,705 and U.S. Patent 4,323,528, the teachings of which are incorporated herein by reference, discloses one such apparatus. This apparatus, commonly known as an "extruder-accumulator system" allows one to operate a process on an intermittent, rather than a continuous, basis. The apparatus includes a holding zone or accumulator where the foamable composition remains under conditions that preclude foaming. The holding zone is equipped with an outlet die that opens into a zone of lower pressure, such as the atmosphere. The die has an orifice that may be open or closed, preferably by way of a gate that is external to the holding zone. Operation of the gate does not affect the foamable composition other than to allow it to flow through the die.

Foam expansion following extrusion of a foamable composition from the extrusion die suitably takes place under normal atmospheric conditions.

The anisotropic strength properties of any of the previously described embodiments of the invention may be further enhanced or augmented by incorporation of continuous and/or discontinuous reinforcing fibers which may be oriented length wise in a direction in which high impact resistance is desired. Suitable reinforcing fibers include synthetic fibers, such as aramid, polyester, and polyolefin fibers; natural fibers, such as sisal; ceramic fibers; glass fibers; metallic fibers; and the like, as disclosed in U.S. Patent No. 6,213,540B1 at column 10, lines 1 to 15, incorporated herein by reference.

The anisotropic foam can be fabricated into any desired shape. In a preferred embodiment the anisotropic foam is a plank, sheet or block of foam as most processes for preparing anisotropic foam form the foam in a plank, sheet or block. Such shapes generally have a square or rectangular shape and have multiple flat surfaces or faces.

The isotropic foam can be any foam which has isotropic properties prepared by any process which prepares a foam having isotropic properties. Preferably, the foam is prepared from a thermoplastic or thermoset matrix. Preferably, the foam is thermoplastic polymer based foam. Generally, any of the thermoplastic material that can be used to prepare anisotropic foam may be used to make isotropic foam. The selection of the process used to make a foam determines whether an isotropic or anisotropic foam is prepared.

In the embodiment wherein the foam used is made from a thermoset polymer, the thermoset polymer may be a polyurethane, polyurea, polyisocyanurate or polymerized epoxy resin matrix foam. Such foams can be prepared by well-known means in the art. Preferably, the thermoset foams are prepared from reactive systems wherein such reactive systems are poured or injected into a mold and allowed to cure to form the desired shape. A polyurethane foam preferably comprises the reaction product of an organic isocyanate; a compound containing isocyanate reactive active hydrogen groups; a catalyst; a blowing agent, for instance water; and optionally, one or more additives such as surfactants, crosslinkers, chain extenders, pigments, stabilizers, fungistats, bacteriostats, fillers and flame retarding agents.

Suitable polyisocyanates may be used in the preparation of polyurethane based thermoset foams are described in U.S. Patent No. 6,028,122 at column 3, lines 31 to 56, relevant portions incorporated herein by reference, see also U.S. Patent No. 6,127,443 at column 6, lines 33 to 51, relevant portions incorporated herein by reference. Suitable polyols useful in the preparation of polyurethane foams are well known to those skilled in the art and include those disclosed in U.S. Patent No. 6,028,122 at column 3, lines 58 to column line 5, relevant portions incorporated herein by reference. Useful catalysts in preparing polyurethane foams are disclosed in U.S. Patent No. 6,028,122 at column 7, line 6 to line 17; U.S. Patent No. 6,127,443 at column 6, line 1 to 16; and in U.S. Patent No. 6,316,514 at column 8, lines 1 to 38, relevant portions incorporated herein by reference. Useful blowing agents for the preparation of polyurethane foams are disclosed in U.S. Patent No. 6,316,514 at column 7, lines 37 to 56, relevant portions incorporated herein by reference. Other suitable additives in polyurethane foam preparation formulations are disclosed in U.S. Patent No. 6,028,122 at column 7, lines 17 to 50, U.S. Patent No. 6,127,443 at column 5 line 35 to Column 6, line 32; and in U.S. Patent No. 6,316,514 at column 8, line 39 to column 9, line 53.

To produce foams useful in the present invention, the polyisocyanates (a), the polyols, (b) and, if desired, further compounds, (c) bearing hydrogen atoms which are reactive toward isocyanates are reacted in such amounts that the equivalence ratio of NCO groups of the polyisocyanates (a) to the sum of the reactive hydrogen atoms of the components (b) and, if used, (c) is 0.7-1.25:1, preferably 0.90-1.15:1. Polyurethane foams are advantageously produced by the one-shot method, for example, by means of the highpressure or low-pressure technique, in open or closed molds, for example, metallic molds. The continuous application of the reaction mixture onto suitable conveyor belts for producing slabstock foam is also customary. The polyols, chain extenders, additives, isocyanates, etc. are mixed together and introduced generally into an open or closed mold. The mixing may take place entirely in the mixhead, that is, using a multi-stream, high pressure mixhead, or the isocyanate-reactive components and isocyanate components may be separately blended into respective A (isocyanate) and B (resin active hydrogen component) sides, and mixed in the mixhead. Water is generally included as a reactive blowing agent, for example, in amounts of from 0.1 weight percent or higher relative to the total weight of the ingredients, to 2 weight percent or lower. Preferably, water is employed in amounts of 0.1 weight percent to 2 weight percent, more preferably 0.2 weight percent to 1.5 weight percent. Foam densities are preferably in the range of 270 $kg/m^3$ to 30 $kg/m^3$, more 200 $kg/m^3$ to 50 $kg/m^3$, and most preferably 65 $kg/m^3$.

In a preferred embodiment the isotropic foams are prepared such that the foams are closed-cell foams so as to prevent water absorption by the foams. Skilled artisans are familiar with techniques for preparing closed cell foams.

In another embodiment the isotropic foam is thermoplastic foam that may be made by conventional extrusion processes such as those disclosed in U.S. Patent No. 3,960,792; U.S. Patent No. 4,636,527 and U.S. Patent No. 5,106,882, incorporated herein by reference. In another embodiment the isotropic foam is bead foam. Bead foam comprises expanded fused bead pellets that have a cellular microstructure. In general, the beads used to make bead foams are prepared by contacting blowing agent and molten thermoplastic polymer and forming pellets or beads upon cooling of the mixture. The beads comprise a polymer with foaming agent or blowing agent entrained therein. Processes for preparation of such beads are disclosed in U.S. Patent No. 5,026,736, at column 1, line 19 to column 4, line 16, incorporated herein by reference. In preferred embodiments the beads used to make the bead foam are pre-expanded which means that they are exposed to an operation that partially expands the bead. Processes for expansion of such beads are well known in the art. Processes for pre-expanding the beads are disclosed in U.S. Patent No. 5,454,703 at column 1, lines 30 to 55, incorporated herein by reference. Bead foams are prepared at contacting the thermoplastic beads containing blowing agent in a mold of the desired shape exposing them to heat, such as by passing steam through the bed of beads to cause release of the blowing agent and foaming and expansion of the beads. Usually in this process the outer surfaces of the beads become molten and the adjacent beads then fuse together as the beads expand. Specific processes for preparing such bead foams can be found in U.S. Patent No. 5,454,703 at column 1, lines 58 to column 2, line 24, incorporated herein by reference.

The composite structures of the invention are prepared by contacting a segment, such as a block, plank or shaped part, of an anisotropic foam with a shaped part of isotropic foam along one common face, surface or the like, and thereafter securing such common face, surface or the like together. The anisotropic foam segment can be contacted on more than one side with isotropic foam. The number of sides or faces of anisotropic foam segment in contact with isotropic foam segment is primarily dictated by the application for which the composite structure is used. In one embodiment the anisotropic foam, block or plank is contacted on all but one surface or face with anisotropic foam. In another embodiment the isotropic foam completely encapsulates the anisotropic foam.

The anisotropic foam block can be foamed or formed into the desired shape in which it is used, or the anisotropic foam block may be cut and shaped into the desired shape of the energy absorbing article. The composite structure may be prepared by any process that results in the preparation of the desired composite of the desired shape. The anisotropic block and isotropic part may be joined by hot air welding, steam welding, radio frequency welding, adhesives, mechanical fasteners, friction fit, or the like, to form a composite structure. In this manner, composite structures having unusual shapes, or containing portions of various densities may be prepared. In a more preferred embodiment the anisotropic foam is placed in a mold and the material used to make the isotropic foam is placed around it and thereafter processed to form isotropic foam around the anisotropic foam. In the embodiment wherein the anisotropic foam is a thermoset foam, the reactive components which are used to prepare the thermoset foam are flowed in around the anisotropic foam and allowed to react to form an anistropic foam adjacent to the desired surfaces of the anisotropic foam. Such a foam can be formed on from one to all sides, faces or surfaces of the anisotropic foam. Alternatively, the anisotropic foam can be partially encapsulated with the isotropic foam. In another embodiment the isotropic foam can be molded separately from the anisotropic foam wherein the isotropic foam is formed with a cavity into which the anisotropic foam can be inserted.

Preferably, the anisotropic foam and isotropic foam can be contacted and adhered to one another by heat welding, an adhesive, adhesive tape or friction fit. In the embodiment where heat welding is used, the surface of the anisotropic foam and the isotropic foam to be contacted are heated until the polymer at the surfaces is in the molten state, the two parts are contacted and then as the polymer surface cools the parts are then welded together. For instance, in the embodiment where the parts are made from polypropylene, the polypropylene surface can be melted at 450°F, (232°C), for 30-60 seconds and thereafter contacted.

In another embodiment the anisotropic and isotropic foam parts can be contacted along the desired surfaces and adhered together using an adhesive composition. Adhesives known in the art may be employed to adhere isotropic and anisotropic foam parts together. Useful adhesives include thermoset adhesives such as polyurethane resins and epoxies and thermoplastic adhesives such as polyethylenes, polypropylenes, ethylene copolymers; propylene copolymers; and the like. Among useful adhesives are those taught in U.S. Patent Nos. 5,460,870 and 5,670,211. The adhesive may be applied by any means known in the art such as by spraying, coating, or in film form. Preferred adhesives are thermoplastic because of their lower cost and potential recyclability. Preferably, the adhesive used is a low energy surface plastic adhesive. By low energy surface plastic is meant materials that have a surface energy of less than 45 mJ/m$^2$, suitably less than 40 mJ/m$^2$ and desirably less than 35 mJ/m$^2$ including, by way of example polypropylene and polyamide. If desired, the surface of the foam segments may be treated or primed to improve adhesion prior to application of the adhesive. Preferably the foam segments are not subjected to treatment or priming and the adhesive is applied directly to the surface of the foam segments.

In a preferred embodiment, the adhesive is a low energy surface plastic adhesive which comprises a polymerizable composition comprising an organoborane/amine complex and one or more of monomers, oligomers or polymers having olefinic unsaturation which is capable of polymerization by free radical polymerization. Optionally, the adhesive may additionally comprise a compound which causes the complex to disassociate so as to release the borane to initiate polymerization of one or more of monomers, oligomers or polymers having olefinic unsaturation. Where a compound which causes the complex to disassociate is employed, it is kept separate from the complex until initiation of polymerization is desired. The polymerizable composition which contains the disassociating agent may be cured at any desired temperature, such as at, or near, ambient temperature and below ambient temperature.

Such low energy surface adhesives comprise preferably acrylate based adhesive compositions wherein polymerization of the acrylate adhesive material is initiated using an alkylborane amine complex. Such alkylborane amine complex further enhances the adhesion of the alkyacrylate to low energy surface adhesive materials such as thermoplastic foam materials. The adhesive is preferably derived from a polymerizable composition comprising

i) an organoborane/amine complex;

ii) one or more of monomers, oligomers or polymers having olefinic unsaturation which is capable of polymerization by free radical polymerization; and, optionally

iii) a compound which causes the said complex to disassociate so as to release the borane to initiate polymerization of one or more of monomers, oligomers or polymers having olefinic unsaturation.

Adhesives and polymerizable compositions disclosed in Application No. PCT/US00/33806 and WO 2003/038006 and U.S. Patent Publication 2002-0033227;U.S. Patent Publication 2002-0058764 and 2002-028894; U.S. Patent No. 5,106,928; U.S. Patent No. 5,143,884; U.S. Patent No. 5,286,821; U.S. Patent No. 5,310,835; U.S. Patent No. 5,376,746; U.S. Patent No. 5,539,070; U.S. Patent No. 5,616,796; U.S. Patent No. 5,621,143; U.S. Patent No. 5,681,910; U.S. Patent No. 5,686,544; U.S. Patent No. 5,718,977; U.S. Patent No. 5,795,657 and U.S. Patent No. 5,883,208, all incorporated herein by reference are especially preferred for use in the present invention to bond the structural member and reinforcing member together.

The organoborane used in the complex is a trialkyl borane or an alkyl cycloalkyl borane. Preferably such borane corresponds to Formula 1:

$$B(R^2)_3 \qquad \text{Formula 1}$$

wherein B represents Boron; and $R^2$ is separately in each occurrence a $C_{1-10}$ alkyl, $C_{3-10}$ cycloalkyl, or two or more of $R^2$ may combine to form a cycloaliphatic ring. Preferably $R^2$ is $C_{1-4}$ alkyl, even more preferably $C_{2-4}$ alkyl, and most preferably $C_{3-4}$ alkyl. Among preferred organoboranes are tri-ethyl borane, tri-isopropyl borane and tri-n-butylborane.

The amines used to complex the organoborane compound can be any amine or mixture of amines which complex the organoborane and which can be decomplexed when exposed to a decomplexing agent. Preferred amines include the primary or secondary amines or polyamines containing primary or secondary amine groups, or ammonia as disclosed in Zharov U.S. Patent No. 5,539,070 at column 5, lines 41 to 53, incorporated herein by reference, Skoultchi U.S. Patent No. 5,106,928 at column 2, line 29 to 58, incorporated herein by reference, and Pocius U.S. Patent No. 5,686,544 at column 7, line 29 to Column 10 line 36, incorporated herein by reference; ethanolamine, secondary dialkyl diamines or polyoxyalkylenepolyamines; and amine terminated reaction products of diamines and compounds having two or more groups reactive with amines as disclosed in Deviny U.S. Patent No. 5,883,208 at column 7, line 30 to column 8 line 56, incorporated herein by reference. With respect to the reaction products described in Deviny the preferred diprimary amines include alkyl diprimary amines, aryl diprimary amines, alkyaryl diprimary amines and polyoxyalkylene diamines; and compounds reactive with amines include compounds which contain two or more moieties of carboxylic acids, carboxylic acid esters, carboxylic acid halides, aldehydes, epoxides, alcohols and acrylate groups.

In one preferred embodiment, the amine comprises a compound having a primary amine and one or more hydrogen bond accepting groups, wherein there are at least two carbon atoms, preferably at least three, between the primary amine and hydrogen bond accepting groups. Preferably, an alkylene moiety is located between the primary amine and the hydrogen bond accepting group. Hydrogen bond accepting group means herein a functional group that through either inter- or intramolecular interaction with a hydrogen of the borane-complexing amine increases the electron density of the nitrogen of the amine group complexing with the borane. Preferred hydrogen bond accepting groups include primary amines, secondary amines, tertiary amines, ethers, halogen, polyethers, thioethers and polyamines. Among preferred amines of this class are dimethylaminopropyl amine, methoxypropyl amine, dimethylaminoethylamine, dimethylaminobutylamine, methoxybutyl amine, methoxyethyl amine, ethoxypropylamine, propoxypropylamine, amine terminated polyalkylene ethers (such as trimethylolpropane tris(poly(propyleneglycol), amine terminated)ether), and aminopropylpropanediamine.

In another embodiment the amine is an aliphatic heterocycle having at least one nitrogen in the heterocycle. The heterocyclic compound may also contain one or more of nitrogen, oxygen, sulfur or double bonds. In addition, the heterocycle may comprise multiple rings wherein at least one of the rings has nitrogen in the ring.

In yet another embodiment, the amine which is complexed with the organoborane is an amidine. Any compound with amidine structure which decomplexes from the alkylborane when exposed to decomplexing agent or heat may be used. Among preferred amidines are 1,8-diazabicyclo[5,4]undec-7-ene; tetrahydropyrimidine; 2-methyl-2-imidazoline; and 1,1,3,3-tetramethylguanidine, and the like.

In yet another embodiment, the amine that is complexed with the organoborane is a conjugated imine. Any compound with a conjugated imine structure, which decomplexes from the alkylborane when exposed to decomplexing agent or heat may be used. The conjugated imine can be a straight or branched chain imine or a cyclic imine.

In another embodiment the amine can be an alicyclic compound having bound to the alicyclic ring a substituent containing an amine moiety. The amine containing alicyclic compound may have a second substituent that contains one or more nitrogen, oxygen, sulfur atoms or a double bond. The alicyclic ring can contain one or two double bonds. The alicyclic compound may be a single or multiple ring structure. Preferably the amine on the first substituent is primary or secondary. Preferably the alicyclic ring is a 5 or 6 membered ring. Preferably functional groups on the second substituent are amines, ethers, thioethers or halogens. Included in amine substituted alicyclic compounds is isophorone diamine and isomers of bis(aminoethyl) cyclohexane.

Compounds capable of free radical polymerization which may be used in the polymerizable compositions include any monomers, oligomers, polymers or mixtures thereof which contain olefinic unsaturation which can polymerize by free radical polymerization. Such compounds are well known to those skilled in the art. Mottus, U.S. Patent No. 3,275,611, provides a description of such compounds at column 2, line 46 to column 4, line 16. Examples of preferable acrylates and methacrylates are disclosed in Skoultchi, U.S. Patent No. 5,286,821 at column 3, lines 50 to column 6, line 12 and Pocius, U.S. Patent No. 5,681,910 at column 9, line 28 to column 12, line 25.

The organoborane amine complexes useful for polymerization of the compounds having moieties capable of free radical polymerization require the application of a decomplexation agent or heat to displace the amine from the borane and initiate free radical polymerization. The displacement of the amine from the alkylborane can occur with any chemical for which the exchange energy is favorable, such as mineral acids, organic acids, Lewis acids, isocyanates, acid chlorides, sulphonyl chlorides, aldehydes, and the like. Preferred decomplexation agents are acids and isocyanates. Polymerization may also be initiated thermally. The temperature at which the composition is heated to initiate polymerization is dictated by the binding energy of the complex. Generally the temperature used to initiate the polymerization by decomplexing the complex is 30°C or greater and preferably 50°C or greater. Preferably the temperature at which thermally initiated polymerization is initiated is 120°C or less and more preferably 100°C or less. Any heat source that heats the composition to the desired temperature can be used, provided the heat source does not negatively impact the components of the composition or its function.

In the embodiment wherein the anisotropic foam and the isotropic foam are held together by friction fit, the anisotropic foam is partially encapsulated by the isotropic foam such that the fit is tight and friction prevents easy removal of the anisotropic foam form contact with the isotropic foam.

The relative amount of anisotropic and isotropic foam used depends upon the application and the requirements of the application. The requirements of energy absorbing efficiency and recoverability are balanced. If higher energy absorbing efficiency is required more anisotropic foam is desired. On the other hand if more recoverability is desired more isotropic foam is desired. To get a good balance of the properties the relative thickness of each of the two foams is preferably from 40 percent or greater of the total thickness each and more preferably 45 percent or greater. To get a good balance of the properties the relative thickness of each of the two foams is preferably 60 percent or less of the total thickness and more preferably 55 percent or less of the total thickness.

The composite structures of this invention have broad applicability in transportation, shipping containers, building and construction, as well as automotive applications. Automotive applications include energy absorbing structures for front and rear end systems, doors, pillars, headliners and instrument panel components. The composite structure of the invention demonstrates good resilience upon being subjected to low speed impact wherein there is minimal visible damage to the anisotropic foam part of the structure. Furthermore, at higher speed impacts, the anisotropic foam structure provides excellent energy absorption characteristics thereby protecting the remainder of the vehicle and the occupants of the vehicle from the impact. In a more preferred embodiment the absorbing structures of the invention are utilized in automobile bumpers.

In one embodiment the invention is an automobile bumper system comprising a bumper beam adapted to be attached to the chassis of a vehicle; one or more composite structures of the invention and a bumper fascia which covers the bumper beam and the composite foam structures so that they are not visible; wherein the isotropic foam part is disposed between the fascia and the anisotropic foam portion of the composite structure, (preferably the anisotropic foam comprises a plurality of oriented strands of foam which are fused together which are attached to the bumper beam wherein the direction of oriented strands of the anisotropic foam blocks is transverse to the longitudinal direction of the bumper beam). Preferably, more than one composite structure is attached to the bumper beam. In this embodiment it is preferable that the composite structure be oriented such that the isotropic foam is on the outside of the structure and the anisotropic foam is closest to the bumper beam. Preferably, the highest strength direction of the anisotropic foam is perpendicular to the bumper beam and is oriented in a direction protruding from the bumper beam. The composite foam structures in preferred embodiments can be located in front of parts of the vehicle which need particular protection, for instance in front of the chassis rail so as to protect the chassis rail of the vehicle. The composite structure of the invention may be attached to the bumper beam by any known means of attachment including by using mechanical fixturing or adhesives, such as low energy surface adhesives. Preferred adhesives for bonding composite structures of the invention to the bumper beam include the low energy surface adhesives described hereinbefore. Due to packaging restrictions, the composite foam structures of the invention when used in bumpers are preferably 75 mm or less and preferably between 50 mm and 75 mm. In one embodiment the thickness of the ansiotropic foam is 25 mm or greater, and more preferably 30 mm or greater. Preferably the thickness of the anisotropic foam is 50 mm or less and more preferably 40 mm or less. In one embodiment the thickness of the isotropic foam is 25 mm or greater, and more preferably 30 mm or greater. Preferably the thickness of the isotropic foam is 50 mm or less and more preferably 40 mm or less. Such thicknesses refer to the relative thicknesses in the direction of the anticipated impact. In one embodiment the foam in the bumper can be completely anisotropic.

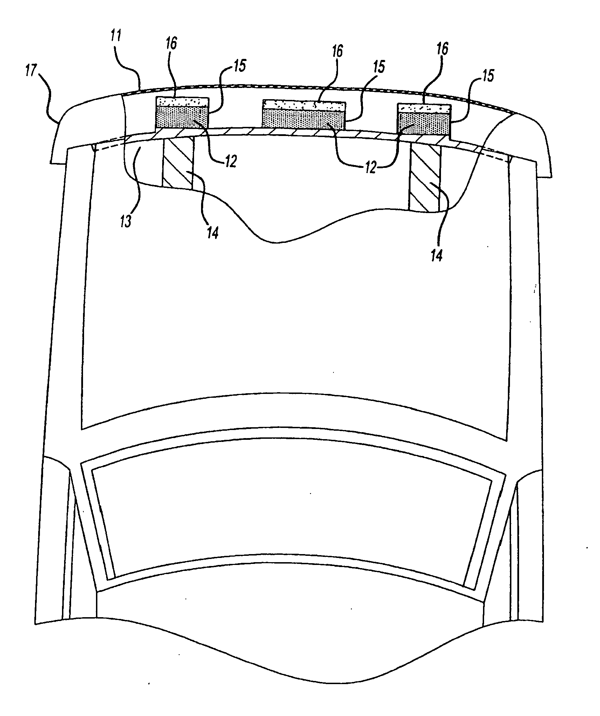

Figure 1 illustrates a bumper system utilizing the composite structures of the invention. In particular Figure 1 illustrates a bumper system (11). The bumper system has three foam blocks (12) which are fastened to a bumper beam (13) which is affixed to two chassis rails (14). Each of the foam blocks has an anisotropic (15) and an isotropic (16) portion with the strongest being the direction of highest strength protruding from the bumper beam in the direction of away from the bumper beam. Covering the entire structure is a bumper fascia (17).

The foams preferably have compressive strengths in the range useful for energy absorbing applications, that is, from 50 kPa 2000 kPa, preferably 50 kPa to 1500 kPa, and more preferably 70 kPa to 1000 kPa. The efficiency and recovery of the foam are key factors in foam performance. Factors such as compressive strength, energy management, compression, etc., are measured by or calculated from measurements of foam properties according to ASTM D-1621 "Standard Test Method For Compressive Properties of Rigid Cellular Plastics." The test methodology employs an Instron Model 55R 112S with a 100 kN load cell. Crosshead speed is 2.54 mm/min per 25.4 mm of sample thickness. Samples are nominal 101.6 mm x 101.6 mm x 25.4 mm. All sample length and width dimensions are measured to three significant digits using Mitutoyo Digimatic™ calipers, and thickness measurements made using a Mitutoyo Digimatic™ indicator type IDF-150E. All samples are conditioned for at least 40 hours at 23°C and 50 percent relative humidity prior to testing under standard laboratory conditions. The Instron tester collects force or load data continuously during deflection such that force (N) is collected versus deflection (mm).

Compressive stress (kPa) is calculated from the force divided by the sample cross-sectional area. Compression (percent) is calculated from the deflection divided by the original sample thickness multiplied by 100. Sample compression continues to 80 percent or until the load limit of the instrument is reached Compressive strength is calculated in accordance with section 9.3.3 of ASTM D1621-00. Recovery, R, (percent) is calculated from the sample thickness measured 5 min after compression to 80 percent divided by the original sample thickness multiplied by 100.


Specific Embodiments


The following examples are provided to illustrate the invention, but are not intended to limit the scope thereof. All parts and percentages are by weight unless otherwise indicated.

A series of quasi-static and dynamic compression tests were performed on composite foam blocks which consisted of varying levels of 46.6 kg/m$^3$ isotropic expanded polypropylene (EPP) bead foam and 37.3 kg/m$^3$ anisotropic polypropylene (PP) foam. The density for each material was reported as the mean of five samples that were measured and weighed to compute the specimen density. In addition, composite blocks were joined together using the following methods to simulate potential manufacturing methods: no adhesive interface, Low Energy Surface Adhesive (LESA) interface, and thermally bonded interface. For those samples that were not adhered, the perimeter of the blocks were simply joined with masking tape to simulate the anisotropic foam block being press fit into an isotropic foam cavity. Thermally bonded samples were prepared by placing the interfacial surface of each block on the surface of a 232°C polytetrafluoroethylene (PTFE) coated plate. The samples were held against the surface of the plate for approximately thirty seconds after which they were then manually pressed together to allow the molten interface to cool.

Samples as described above were tested according to GM216M - Recoverable Energy Absorbing Foam Specification (General Motors Corporation specification). This specification defined the minimum physical requirements for a cellular plastic product known as recoverable energy absorbing polyurethane foam. This product's main application was as an energy absorbing material, used in conjunction with other materials and structures to meet the requirements of United States Federal Motor Vehicle Safety Standard (FMVSS) 201U and FMVSS 214, or for energy absorbing bumpers per FMVSS 581. This material may be used for energy absorbing applications where recoverable foam is desired, such as knee bolsters, instrument panel topper pads, airbag doors, side impact door bolsters, and head impact countermeasures.

Per Table 2 (Specific Physical Requirements) of GM216M, recoverability was to be measured using a 50-millimeter (mm) foam cube. Prior to testing, the initial thickness ($t_i$) of the foam specimen is to be measured to the nearest 0.03 mm. On a non-perforated surface, the specimen was then to be compressed to 75 percent of its original thickness at a rate of 101.6 mm/min. The final thickness ($t_f$) was to be measured to the nearest 0.03 mm approximately five minutes after removal of the load. Recoverability, in percentage, was then computed from the following equation:

$$\text{Percent Recoverability} = (100 * t_f)/t_i \quad (1)$$

The minimum level of recoverability accepted per the GM216M specification was 80 percent.

Quasi-Static Compression Test Equipment

All quasi-static compression tests conducted in accordance with GM216M were performed on a low-rate servohydraulic test system available from Materials Test System (MTS). The servohydraulic test system was equipped with a 0-22.2 kiloNewton (kN) load cell and a 0-125 mm linear variable differential transformer (LVDT) to measure transient force and displacement respectively. All foam samples were placed in a compression test fixture consisting of two flat aluminum plates and four polished shafts guided on linear bearings. The aluminum plates were substantially larger than the surface area of the foam specimen to ensure that the sample was compressed uniformly throughout the test.

The sample thickness was measured before and five minutes after removal of the load using digital calipers, available from Mitutoyo America Corporation, with a full-scale range of 150 mm. Five replicate tests were performed on each series of foam samples.

Three sets of samples were run. In one the isotropic foam was adhesively bonded to the anisotropic foam and in a second the foams were thermally bonded and in the third the foam parts were taped together. Several tests were performed using a total mm thickness of the sample with from 0 to 50 mm of anisotropic foam at 10 mm increments. The results of the testing were compiled in Table 1.

Table 1
Percent Recovery

| Anisotropic Foam Thickness (mm) | No Adhesive Interface | Thermally Bonded Interface | LESA Adhesive Interface |
|---|---|---|---|
| 0 | 93.33 | 93.33 | 93.33 |
| 0 | 93.39 | 93.39 | 93.39 |
| 0 | 93.77 | 93.77 | 93.77 |
| 0 | 94.32 | 94.32 | 94.32 |
| 0 | 93.19 | 93.19 | 93.19 |
| 10 | 87.99 | 90.17 | |
| 10 | 87.89 | 88.35 | 87.65 |
| 10 | 86.45 | 89.60 | 87.48 |
| 10 | 87.70 | 86.73 | 87.95 |
| 10 | 86.37 | 82.94 | 87.08 |
| 20 | 80.13 | 83.64 | 83.69 |
| 20 | 80.58 | 83.71 | 83.31 |
| 20 | 81.58 | 83.82 | 81.29 |
| 20 | 81.06 | 83.75 | 82.09 |
| 20 | 80.84 | 84.14 | 83.62 |
| 30 | 75.62 | 79.86 | 78.53 |
| 30 | 74.10 | 77.86 | 79.14 |
| 30 | 75.58 | 79.38 | 79.33 |
| 30 | 74.81 | 79.48 | 76.42 |
| 30 | 76.83 | 79.98 | 78.07 |
| 40 | 71.36 | 72.65 | 77.02 |
| 40 | 72.44 | 75.63 | 76.66 |
| 40 | 74.43 | 75.24 | 76.28 |
| 40 | 72.29 | 77.76 | 76.52 |
| 40 | 71.29 | 71.04 | 74.75 |
| 50 | 72.22 | 72.22 | 72.22 |
| 50 | 74.32 | 74.32 | 74.32 |
| 50 | 73.74 | 73.74 | 73.74 |

(continued)

Percent Recovery

| Anisotropic Foam Thickness (mm) | No Adhesive Interface | Thermally Bonded Interface | LESA Adhesive Interface |
|---|---|---|---|
| 50 | 73.52 | 73.52 | 73.52 |
| 50 | 71.90 | 71.90 | 71.90 |

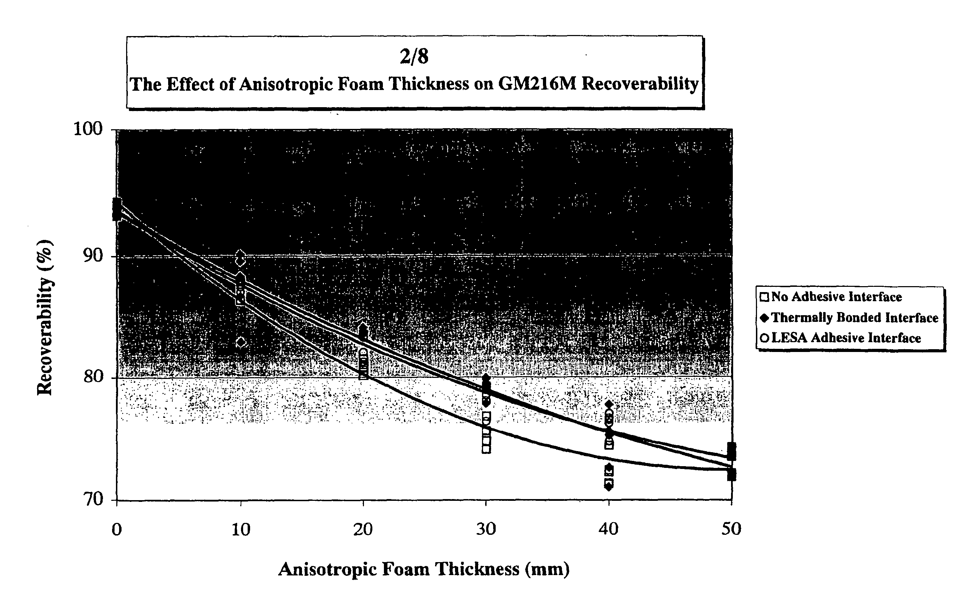

A plot of GM216M recoverability (percent) as a function of anisotropic foam thickness was plotted in Figure 2 for all three attachment methods.

The data clearly demonstrated that 80 percent recoverability may be achieved with approximately 20-30 millimeters of anisotropic foam thickness, or 40-60 percent of the total composite thickness. Moreover, the data also demonstrated that there is very little effect of the method of joining on recoverability.

Quasi-Static Compressive Response

In contrast to recoverability, one method to characterize the compressive response of any foam was to compute its constitutive response in the form of a stress versus strain curve. The transient stress, $\sigma$, and strain, $\varepsilon$, of any given material may be computed from the following equations

$$\text{Stress} = F/A \quad (2)$$

$$\text{Percent Strain} = \Delta t/t_0 \quad (3)$$

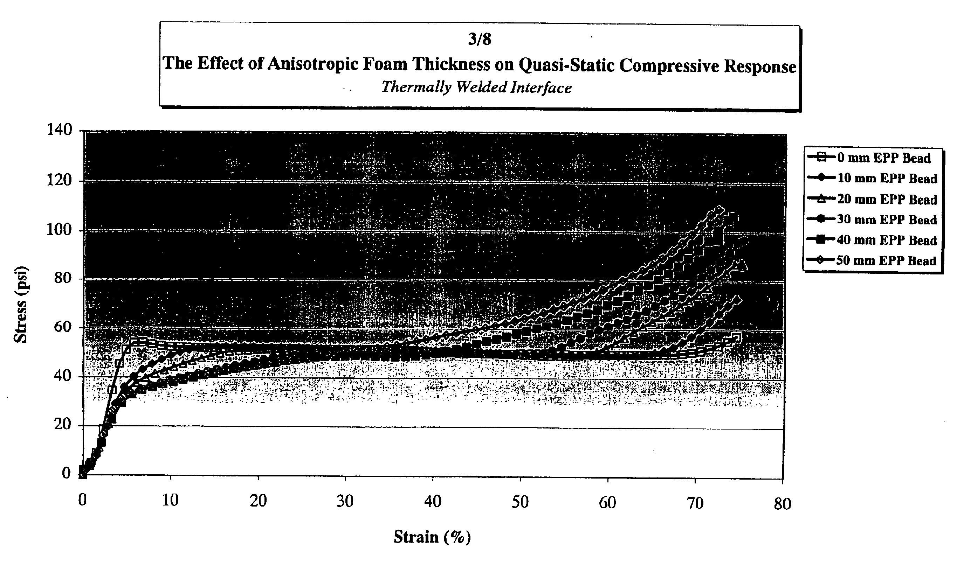

where F is the transient force as measured by the load cell, A was the surface area of the foam specimen, $\Delta t$ was the change in thickness of the foam sample, and $t_0$ was the original thickness of the foam sample prior to testing. Several tests were performed using a total mm thickness of the sample of 50 mm with from 0 to 50 mm of anisotropic foam at 10 mm increments with the remainder being isotropic foam. Representative plots of the effect of anisotropic foam thickness on the quasi-static compressive stress versus strain response of composite foam specimens were illustrated in Figures 3 to 5.

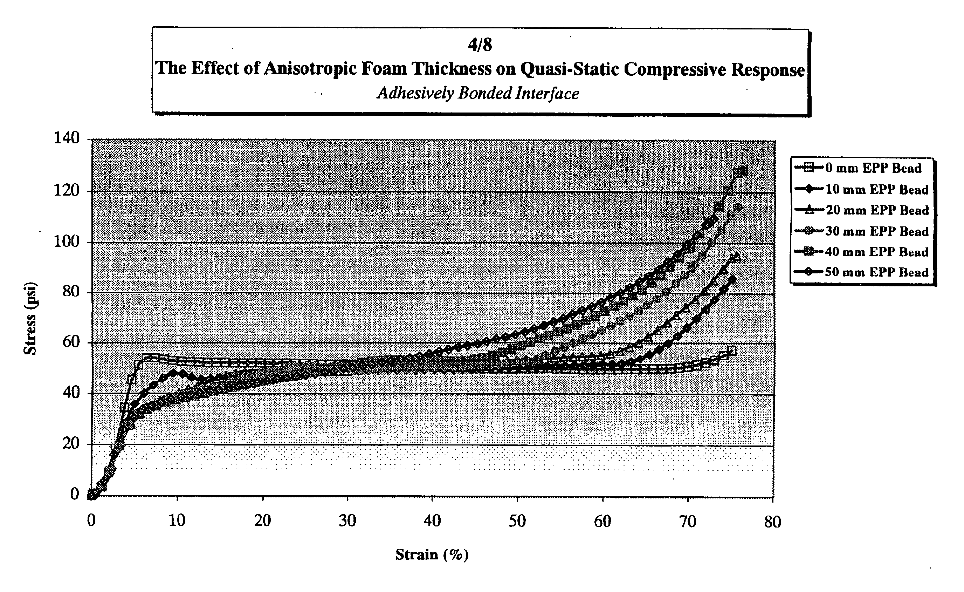

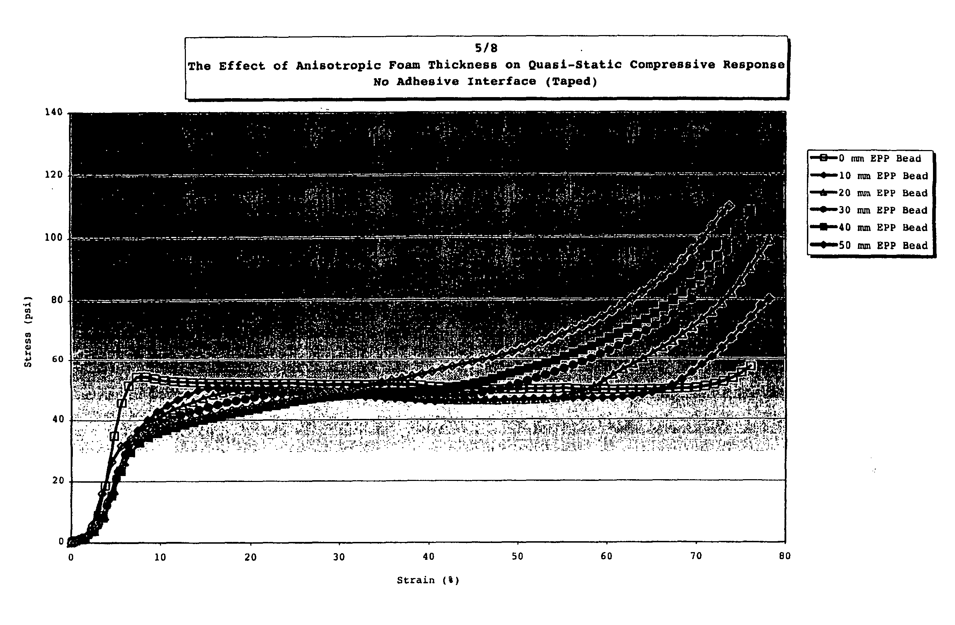

Figure 3 showed the plot for thermally welded parts. Figure 4 showed the plot for adhesively bonded parts and Figure 5 showed the plot for taped parts.

The specimens tested had a size of 50 mm x 50 mm x 50 mm and the actuator velocity was 101.6 mm/min.

The quasi-static compression stress levels at 70 percent strain for each tested attachment system at the various anisotropic foam thicknesses tested were illustrated in Table 2.

Table 2

| Quasi-Static Compression Stress Levels @ 70Percent Strain | | | |
|---|---|---|---|
| Anisotropic Foam Thickness | No Adhesive Interface (Taped) | Adhesively Bonded Interface | Thermally Welded Interface |
| 0 | 97.4 | 100.3 | 101.8 |
| 10 | 86.7 | 98.6 | 92.8 |
| 20 | 81.7 | 89.2 | 80.7 |
| 30 | 72.0 | 75.4 | 74.6 |
| 40 | 56.8 | 67.2 | 59.2 |
| 50 | 50.4 | 51.0 | 51.3 |

For high-speed impacts, engineers typically desire materials that were capable of stabilizing the loading, or stress, as intrusion, or strain, increases. Thus, engineers often refer to this desired attribute as a square wave response. The quasi-static compressive stress versus strain curves clearly demonstrated that increasing the anisotropic foam content results in a decrease in the transient stress at higher strain levels (that is >30 percent). Thus, this type of response indicated an improvement in performance as composite thickness was held constant or the ability to decrease composite thickness while achieving equivalent performance to samples containing lower levels of anisotropic foam.

Dynamic Compression Test Equipment

In an effort to characterize the compressive response of composite foam blocks subjected to dynamic test conditions, a series of compression tests were performed with a 6.8 kilogram aluminum sled equipped with a 12.5 mm thick, 150 mm square faced plate.

The sled was equipped with a 0-500 g piezoresistive accelerometer to record transient deceleration and a 0-22.2 kN piezoelectric load cell. The output from the piezoresistive accelerometer was transmitted to a digital strain conditioner whereas the output from the piezoelectric load cell was transmitted to a charge amplifier. The output from the strain conditioner and charge amplifier were then transmitted to a sixteen channel analog input card. The sled was guided along a low friction track via roller bearings. The sled was propelled using a high-rate servohydraulic test system available from MTS. The targeted impact velocity for this series of experiments was 6.7 meters per second (m/s).

Dynamic Compressive Response

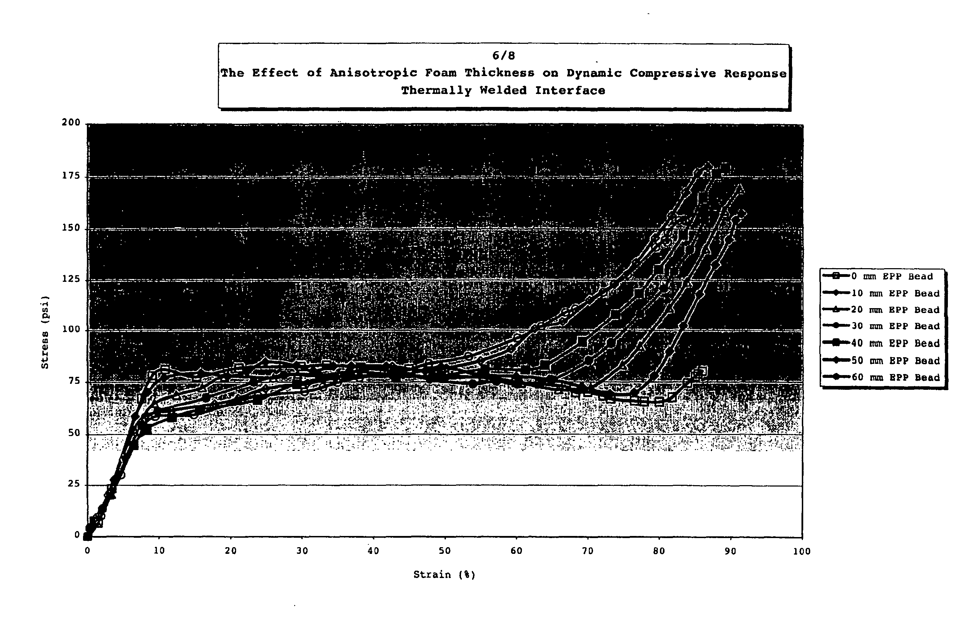

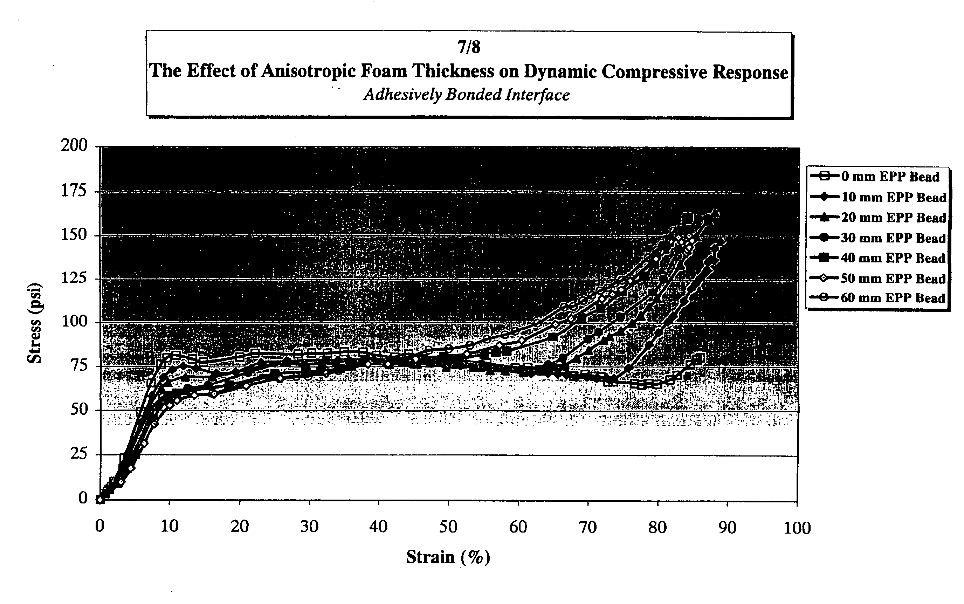

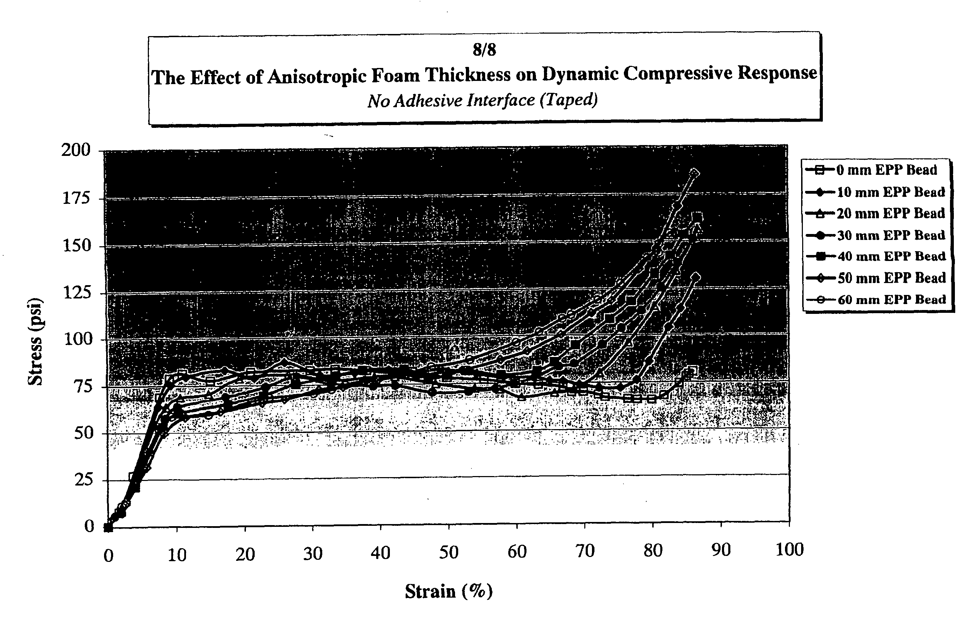

Composite foam blocks were subjected to a series of high-speed compression tests with a targeted impact velocity of 6.7 m/s. Five replicate tests were performed for each joining method using samples that were approximately 75 mm x 75 mm x 60 mm (thickness). This specific thickness was selected to reflect the desire of European automobile manufacturers to meet the requirements of pending pedestrian impact legislation without an increase in today's bumper energy absorbing foam thickness of approximately 60 mm. Several tests were performed using a total thickness of the sample of 60 mm with from 0 to 60 mm of anisotropic foam at 10 mm increments with the remainder being isotropic foam. The impact velocity was 15 mph. A representative plot of the effect of anisotropic foam thickness on the dynamic compressive stress versus strain response of thermally bonded composite foam specimens was illustrated in Figures 6 to 8. Figure 6 illustrated the data from a thermally bonded interface, Figure 7 illustrated the data from an adhesively bonded interface and Figure 8 illustrated the data from parts taped together.

The dynamic compressive stress versus strain curves clearly demonstrated that increasing the anisotropic foam content results in a decrease in the transient stress at higher strain levels (that is >50 percent). Thus, this type of response indicated an improvement in performance as composite thickness is held constant or the ability to decrease composite thickness while achieving equivalent performance to samples containing lower levels of anisotropic foam.

The compression stress levels at 70 percent strain for each tested attachment system at various anisotropic foam thicknesses tested were illustrated in Table 3.

Table 3

| Dynamic Compression Stress Levels @ 70 Percent Strain | | | |
|---|---|---|---|
| Anisotropic Foam Thickness | No Adhesive Interface (Taped) | Adhesively Bonded Interface | Thermally Welded Interface |
| 0 | 114.8 | 114.8 | 114.8 |
| 10 | 109.8 | 109.4 | 115.0 |
| 20 | 98.0 | 104.7 | 97.3 |
| 30 | 89.1 | 91.3 | 85.7 |
| 40 | 74.2 | 84.9 | 71.9 |
| 50 | 73.6 | 69.3 | 72.4 |
| 60 | 70.2 | 70.2 | 70.2 |

**Claims**

1. An automobile energy absorbing article comprising a first part of an anisotropic thermoplastic foam and a second part of a shaped foam part comprising an isotropic foam wherein the anisotropic foam part and isotropic foam part intersect along at least one common surface.

2. An article according to Claim 1 wherein the isotropic foam part is comprised of a plurality of beads of foamed thermoplastic polymer that are fused together.

3. An article according to Claim 1 or Claim 2 wherein the anisotropic foam is bonded to the isotropic foam part by melting the common surfacing and fusing them together.

4. An article according to any of Claims 1 to 3, wherein the anisotropic foam is a polystyrene resin.

5. An article according to any one of Claims 1 to 4, wherein the article is an automobile bumper system comprising a bumper beam adapted to be attached to the chassis of a vehicle and a bumper fascia which covers the bumper beam and the foam parts so that they are not visible.

6. A method of preparing an article according to any one of Claims 1 to 5 comprising placing a part of anisotropic foam in a mold, placing thermoplastic beads impregnated with a blowing agent in the remainder of the mold, injecting steam into the mold under conditions such that the thermoplastic beads expand, melt at the surface, form a coalesced isotropic foamed structure which bond to one or more surfaces of the anisotropic foam.

7. A process for preparing an article according to any one of Claims 1 to 5 which comprises inserting an anisotropic foam block into a mold, pouring or injecting reactive ingredients into the mold which upon contact form a foamed thermoset isotropic polymer foam under conditions such that the isotropic polymer foam is adjacent to and bonded to at least one surface of the anisotropic foam block.

8. A process for preparing an article according to any one of Claims 1 to 5 which process comprises:

    a) contacting the common surface of one or both of an anisotropic foam part and a shaped isotropic foam part with an adhesive which bonds to both foams,
    b) contacting the anisotropic foam part with the isotropic foam part along one or more common surfaces with adhesive disposed between the common surfaces, and
    c) allowing the adhesive to bond the anisotropic foam part to the isotropic foam part.

**The Effect of Anisotropic Foam Thickness on GM216M Recoverability**

Legend:
- □ No Adhesive Interface
- ◆ Thermally Bonded Interface
- ○ LESA Adhesive Interface

Y-axis: Recoverability (%)
X-axis: Anisotropic Foam Thickness (mm)

EP 1 690 746 A2

3/8

**The Effect of Anisotropic Foam Thickness on Quasi-Static Compressive Response**

*Thermally Welded Interface*

Legend: 0 mm EPP Bead; 10 mm EPP Bead; 20 mm EPP Bead; 30 mm EPP Bead; 40 mm EPP Bead; 50 mm EPP Bead

X-axis: Strain (%); Y-axis: Stress (psi)

**The Effect of Anisotropic Foam Thickness on Quasi-Static Compressive Response**
*Adhesively Bonded Interface*

EP 1 690 746 A2

The Effect of Anisotropic Foam Thickness on Quasi-Static Compressive Response
No Adhesive Interface (Taped)

The Effect of Anisotropic Foam Thickness on Dynamic Compressive Response
Thermally Welded Interface

EP 1 690 746 A2

**The Effect of Anisotropic Foam Thickness on Dynamic Compressive Response**
*Adhesively Bonded Interface*

Legend:
- 0 mm EPP Bead
- 10 mm EPP Bead
- 20 mm EPP Bead
- 30 mm EPP Bead
- 40 mm EPP Bead
- 50 mm EPP Bead
- 60 mm EPP Bead

X-axis: Strain (%)
Y-axis: Stress (psi)

EP 1 690 746 A2

**8/8**

**The Effect of Anisotropic Foam Thickness on Dynamic Compressive Response**

*No Adhesive Interface (Taped)*

Legend:
- 0 mm EPP Bead
- 10 mm EPP Bead
- 20 mm EPP Bead
- 30 mm EPP Bead
- 40 mm EPP Bead
- 50 mm EPP Bead
- 60 mm EPP Bead

Y-axis: Stress (psi)

X-axis: Strain (%)

EP 1 690 746 A2